# EUROPEAN PATENT APPLICATION

(11) **EP 2 203 025 A1**
(43) Date of publication of application: **30.06.2010**
(21) Application number: 08841160.8
(22) Date of filing: 16.10.2008
(51) Int. Cl.: H04W 88/04, H04L 29/06

(54) **METHOD FOR TRANSMITTING SMS AND SMS PLATFORM**

(30) Priority: 19.10.2007 CN 200710163383
(71) Applicant: Huawei Technologies Co., Ltd., Longgang District, Shenzhen Guangdong 518129 (CN)
(72) Inventor: LI, Guihua, Guangdong 518129 (CN); CHEN, Hongming, Guangdong 518129 (CN); YI, Zhiquan, Guangdong 518129 (CN)
(74) Representative: Pfenning, Meinig & Partner GbR
(86) International application number: PCT/CN2008/072718
(87) International publication number: WO 2009/052748

(57) **Abstract**

A method for transmitting short message, SM and an SM platform. A downlink SM transmission method includes: receiving an SM transmitted from a PC Client, where the SM is identified by a service code and a mobile terminal number; converting the service code into a public code, where the total digits of the public code and the mobile terminal code meet the requirement on length regulated in the protocol; and transmitting the SM identified by the public code plus the mobile terminal number to the corresponding mobile terminal. An uplink SM transmission method and a corresponding SM platform are provided. The present invention may ensure that the total digits of the identifier of the transmitted SM meet the requirement on length in the conventional protocol; therefore, the SM may be transmitted properly.

## Description

This application claims the priority to Chinese patent application No. 200710163383.4, filed with the Chinese Patent Office on Oct. 19, 2007 and entitled "Method for Transmitting Short Message and Short Message Platform", all contents of which are incorporated herein by reference.

### Field of the Invention

The present invention relates to communication technologies, and in particular, to a method of transmitting short message, SM, and an SM platform.

### Background of the Invention

In order to meet the industry's requirements on information services, a PC Client of the same number as a mobile terminal is introduced to integrate the multiple application and communication capabilities of enterprises to realize the functions of call, SM, etc as the mobile terminal.

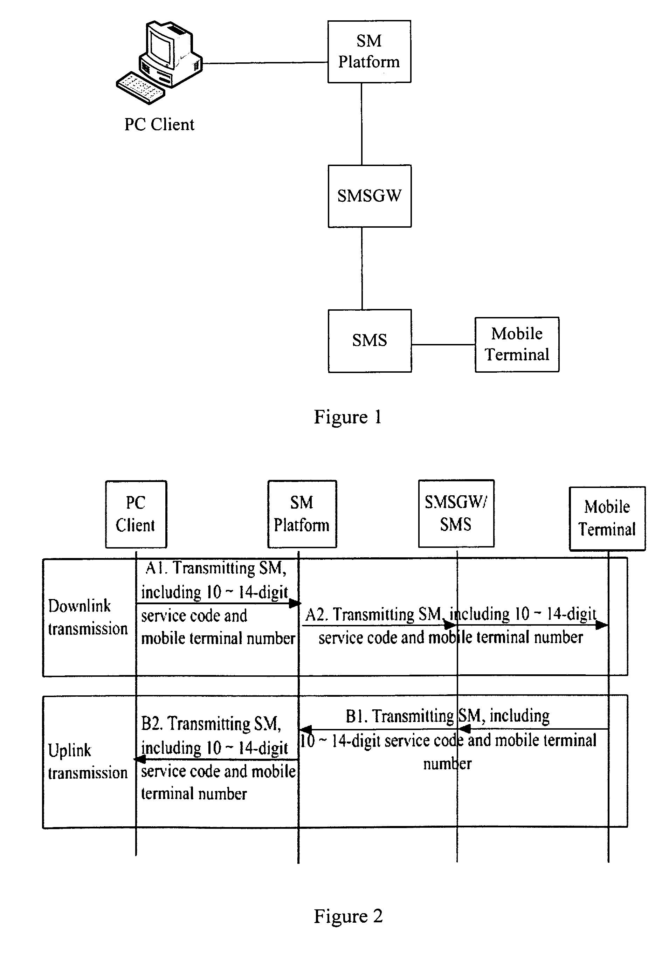

The above network architecture for transmitting the SM may be as shown in Figure 1, including a PC Client, an SM platform, an SM Service Gateway, SMSGW/an SM Service Center, SMS and a mobile terminal.

In the method of downlink SM transmission of the prior art, ie the process of transmitting SM from the PC Client to the mobile terminal, the SM is identified by the service code and the mobile terminal number. As is illustrated in Figure 2, the specific procedure is in the following:
Step 2A1: The PC Client transmits an SM to the SM platform; the SM is identified by the service code and the number of the recipient mobile terminal.
Step 2A2: The SM platform transmits the SM to the mobile terminal through the SMSGW and SMS; the SM is identified by the service code and the number of the recipient mobile terminal.

In the method of uplink SM transmission of the prior art, ie the process of transmitting the SM to the PC Client by the mobile terminal, the SM also needs to be identified by the service code and the mobile terminal number. As is illustrated in Figure 2, the specific procedure is in the following:
Step 2B 1: The mobile terminal transmits the SM through the SMSGW and the SMS to the SM platform; the SM is identified by the number of the recipient PC Client and the service code.
Step 2B2: The SM platform transmits the SM to the PC Client; the SM is identified by the number of the recipient PC Client and the service code.

In the prior art, the number of the recipient PC Client in the uplink SM transmission is similar to the mobile terminal number in the downlink SM transmission; the number commonly has 11 digits; for example, the number of the PC Client is 13800000001 while the mobile terminal number is 13800000002. The service code is usually allocated by the carrier which ranges from 10 to 14 digits.

In the prior art, however, the protocol adopted between the mobile terminal and the SMS and the protocol between the SMS and the SMSGW (such as the SM Peer to Peer Protocol, SMPP) regulate that the compatible number has 21 digits in total; the total digits of the mobile terminal number plus the service code and the total digits of the PC Client plus the service code rang from 21 to 25; as a result, when the total digits of the mobile terminal number plus the service code and the total digits of the PC Client plus the service code are more than 21, according to the regulation of the present protocol, the SM can not be transmitted successfully.

### Summary of the Invention

Embodiments of the present invention provide a method for transmitting the SM and the SM platform to solve the problem that when total digits of the mobile terminal number plus the service code and the total digits of the PC Client plus the service code are more than the maximum digits regulated in the present protocol, the SM can not be transmitted successfully.

In order to solve the above technical problem, embodiments of the present invention provide a method, system, SM platform and device for transmitting SM in the following.

A downlink SM transmission method includes:
receiving an SM transmitted from a PC Client, where the SM is identified by a service code and a mobile terminal number; and;
converting the service code into a public code, where the total digits of the public code plus the mobile terminal code meet the requirement on length regulated in a protocol; and
transmitting the SM identified by the public code plus the mobile terminal number to a corresponding mobile terminal.

An uplink SM transmission method includes:
receiving an SM transmitted through an SMSGW and an SMS, where the SM is identified by a public code and a number of the recipient PC Client, and the total digits of the public code plus the recipient PC Client meet the requirement on length regulated in the protocol;
converting the public code into a service code according to a prestored correspondence between the number of the recipient PC Client and the service code; and
transmitting the SM identified by the service code plus the recipient PC Client to a corresponding recipient PC Client.

An SM platform for downlink SM transmission includes a PC Client interface module, a first converting module and an SMSGW interface module, where:
the PC Client interface module is configured to receive an SM identified by a service code and a mobile terminal number;
the first converting module is configured to convert the service code in the SM received by the PC Client interface module into a public code, where the total digits of the public code and the mobile terminal code meet the requirement on length regulated in the protocol; and
the SMSGW interface module is configured to transmit the SM identified by the public code plus the mobile terminal number to the corresponding mobile terminal.

An SM platform for uplink SM transmission includes a PC Client interface module, a second converting module and an SMSGW interface module, where:
the SMSGW interface module is configured to receive an SM transmitted from a mobile terminal, where the SM is identified by a public code and a number of the recipient PC Client, and the total digits of the public code plus the number of the recipient PC Client meet the requirement on length regulated by the protocol;
the second converting module is configured to convert the public code in the SM into a service code according to the prestored correspondence between the number of the recipient PC Client and the public code; and
the PC interface module is configured to transmit the SM identified by the service code plus the number of the recipient PC Client to the corresponding recipient PC Client.

As can be seen from the solutions provided in the embodiments of the present invention, during the process of downlink SM transmission, when the service code in the SM is converted into a public code and the total digits of the public code plus the mobile terminal number meet the requirement on length regulated in the protocol, the SM identified by the public code plus the mobile terminal number is transmitted to the mobile terminal. As a result, it is ensured that the SM is transmitted to the mobile terminal properly since the total digits of the public code plus the mobile terminal number meet the requirement on length regulated in the protocol. During the process of uplink SM transmission, the SM identified by the public code plus the number of the recipient PC Client is transmitted; the public code in the SM is converted into a service code according to the prestored correspondence between the number of the recipient PC Client and the public code; the SM identified by the service code plus the number of the recipient PC Client is transmitted to the corresponding recipient PC Client, and therefore, it is also ensured that the SM is transmitted properly since the total digits of the public code plus the number of the recipient PC Client meet the requirement on length regulated in the protocol.

### Brief Description of the Drawings

For better understanding of the technical solution provided in the embodiments of the present invention or in the prior art, the following describes the accompanying drawings that are used in the embodiments of the present invention or in the prior art. Obviously, the following drawings are some exemplary embodiments of the present invention only. Those skilled in the art may obtain other drawings based on the following drawings without creative work.
Figure 1 is an architectural diagram of the SM transmission network in the prior art;
Figure 2 is a flow chart of the uplink and downlink SM transmission in the prior art;
Figure 3 is a flow chart of a method of the downlink SM transmission in an embodiment of the present invention;
Figure 4 is a flow chart of a method of the uplink SM transmission in an embodiment of the present invention;
Figure 5 is a block diagram of a system of the downlink and uplink SM transmission in an embodiment of the present invention;
Figure 6 is a flow chart of an SM platform for downlink SM transmission in an embodiment of the present invention; and
Figure 7 is a flow chart of an SM platform for uplink SM transmission in an embodiment of the present invention.

### Detailed Description of the Invention

The present invention provides a method of SM transmission; during the process of downlink SM transmission, the SM identified by a service code plus the mobile terminal number from the PC Client is received, and then the service code is converted into a public code; when the total digits of the public code plus the mobile terminal number meet the requirement on length regulated in the protocol, the SM identified by the public code plus the mobile terminal number is transmitted to the mobile terminal. During the process of uplink SM transmission, the SM transmitted from the SMS is received, where the SM is identified by the public code and the number of the recipient PC Client and the total digits meet the requirement on length regulated in the protocol; the public code in the SM is converted into a service code according to the prestored correspondence between the number of the recipient PC Client and the service code; the SM is transmitted to the corresponding recipient PC Client.

The technical solution of the present invention is hereinafter described in detail with reference to the accompanying drawings. It is evident that the embodiments are only exemplary embodiments of the present invention and the present invention is not limited to such embodiments. Other embodiments that those skilled in the art obtain based on embodiments of the present invention without creative work also fall in the scope of protection of the present invention.

For better understanding of the technical solution of the present invention, the present invention is hereinafter described in detail with reference to accompanying drawings and exemplary embodiments.

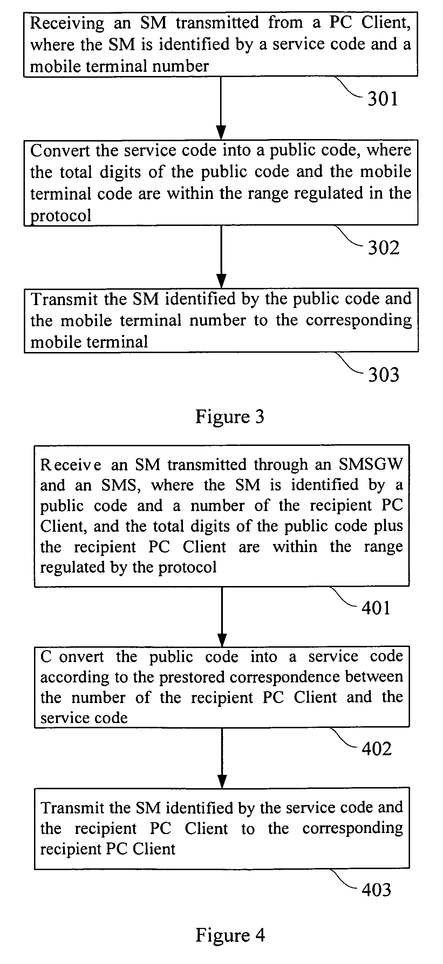

A method embodiment of downlink SM transmission of the present invention is as shown in the flowchart of Figure 3 and detailed as follows.

Step 301: Receiving an SM transmitted from a PC Client, where the SM is identified by a service code and a mobile terminal number.

Step 302: Converting the service code into a public code, where the total digits of the public code plus the mobile terminal number meet the requirement on length regulated in a protocol.

The service code may be converted into a vacant public code. After receiving the service code in the SM transmitted from the PC Client, the service type may be determined and the corresponding service may be provided; afterwards, the SM, identified only by the mobile terminal number, may be transmitted to the mobile terminal through the SMSGW and the SMS. The identification of the mobile terminal number is usually of 11 digits and meets the requirement (e.g. the requirement of no more than 21 digits regulated in SMPP) of the conventional protocol, so that the SM may be transmitted to the mobile terminal properly.

Considering that, after the mobile terminal receives the SM, the SM replied by the mobile terminal may be transmitted to the PC client only with the service code, the service code of 11 to 14 digits may be converted into a public code of no more than 10 digits.

Since the conventional service code is of 11 to 14 digits, when plus the 11-digit mobile terminal number, the total digits are 22 to 25 which can not meet the requirement (no more than 21 digits) in the conventional protocol. When the service code of 11 to 14 digits is converted to a code no more than 10 digits, the total digits of the code plus the mobile terminal number is at most 21, and then the requirement of the conventional protocol is met, which ensures that the SM may be transmitted properly.

Step 303: Sending the SM identified by the public code plus the mobile terminal number to the corresponding mobile terminal.

In addition, in the prior art the SMs transmitted by different PC Client display different service codes; as a result, the subscribers of the mobile terminals may find it difficult to distinguish or memorize the corresponding service codes of different PC Clients, and thus, it is infeasible to add the corresponding service code of the PC Client when the SMs are sent to different PC Clients initiatively by the mobile terminals. In the embodiments of the present invention, however, the service codes of 10 to 14 digits of different PC Clients may be converted into public codes of no more than 10 digits, e.g. unifying into a 5-digit public code; therefore, the subscribers of the mobile terminals may identify and memorize this number easily; and when the SM is transmitted to the corresponding PC Client initiatively, a 5-digit public code is required to be added.

It needs to be noted that in the related charging process, the service code instead of the public code needs to be sent to the charging device by the SM platform, because the public code is unable to distinguish different PC Clients; when multiple PC Clients of different enterprises transmit messages using the above method, charging different enterprises may not be realized.

The method embodiment of the uplink SM transmission is as shown in the flowchart of Figure 4 and detailed as follows.

Step 401: Receiving an SM transmitted from the SMSGW and SMS, where the SM is identified by the public code and the number of the recipient PC Client, and the total digits of the public code plus the number of the recipient PC Client meet the requirement on length in the protocol.

The SM in this step may be a reply message for the SM transmitted previously by the PC client or an SM originally transmitted by the mobile terminal; in the former case, the SM is identified by the converted public code, and thus when replying, the recipient's number automatically includes the public code; in the latter case, however, the public code needs to be added by the subscriber of the mobile terminal.

Step 402: Converting the public code in the SM into a service code according to the prestored correspondence between the number of recipient PC Client and the service code.

Step 403: Transmitting the SM identified by the service code plus the number of the recipient PC Client to the corresponding recipient PC Client.

The correspondence between the PC Client number and the service code may be prestored on the SM platform, where different PC Clients may be identified by different service codes; therefore, when the mobile terminal receives the SM, the mobile terminal may transmit the SM to the PC Client corresponding to the service code according to the recipient PC Client address identified in the SM.

In the above process, since the transmitted SM is identified by the public code and the number of the recipient PC Client, where the total digits of the public code is no more than 10 and the number of the recipient PC client commonly contains 11 digits, thus the total digits are no more than 21, which may meet the requirement on the total length (no more than 21 digits) in the conventional protocol; as a result, the transmission of the SM is ensured.

The public code herein may be a 5-digit public code as described above, and may be sent to different PC Clients with a uniform 5- digit public code; therefore, the subscribers of the mobile terminals may memorize this number easily when transmitting this SM to the PC Clients; and the service code may be an original 10-digit or 14-digit code.

After the SM platform converts the public code in the SM into a service code, the SM platform transmits the SM including the service code to the corresponding recipient PC Client according to the prestored correspondence between the number of the recipient PC Client and the service code.

Similarly, in the charging process, the SM platform is also required to transmit the service code instead of the public code to the related devices, for the public code may not distinguish different PC Clients; otherwise, when the SM is sent to PC Clients of multiple enterprises, charging on different enterprises may not be realized.

In the above embodiment of method for downlink or uplink SM transmission, the PC Client may be a service provider, SP, host, for in the present SM transmitting process of the SP host, there also exists the problem that a too long service code exceeding the requirement on length in the conventional protocol causes the failure in SM transmission. When the PC Client is a SP host, since the SP host may provide different services and different services may employ different service code identification, and therefore, the mobile terminal needs to convert the public code in the transmitted SM into a service code, and then when the SP host receives the SM, the SP host may know the specific service application corresponding to the SM.

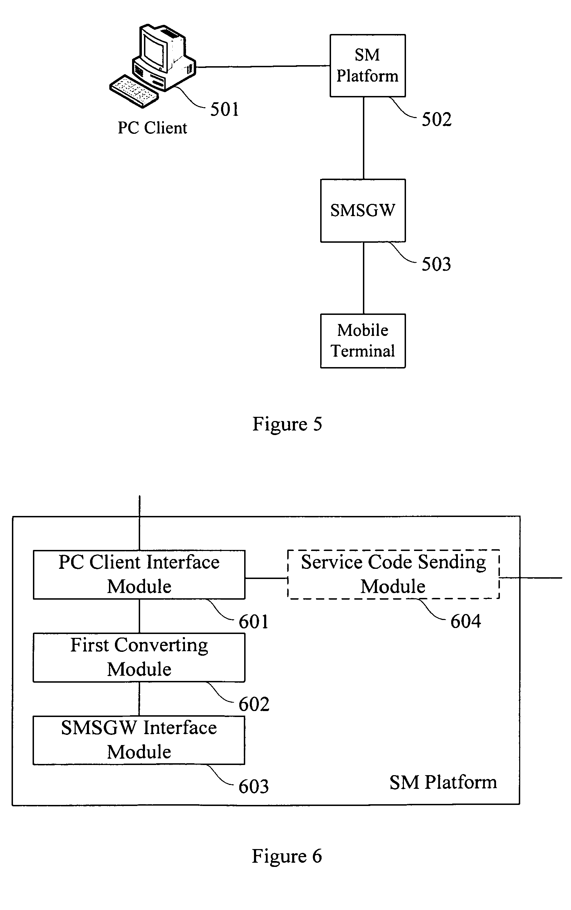

The system embodiment of the downlink SM transmission is as shown in the block diagram of Figure 5 and detailed as follows.

A system of downlink SM transmission includes a PC Client 501, an SM platform 502, an SMSGW/ SMS 503, where,
the PC Client 501 is configured to transmit an SM identified by the service code and the mobile terminal number to the SM platform 502;
the SM platform 502 is configured to receive the SM identified by the service code plus the mobile terminal number, convert the service code into a public code, where total digits of the public code plus the mobile terminal number meet the requirement on length in the protocol, and transmit the SM identified by the public code plus the mobile terminal number according to the mobile terminal number via the SMSGW/SMS 503 to the corresponding terminal; the service code may be converted into a vacant public code to meet the requirement on length regulated in the protocol; and
the SM platform 502 is further configured to send the service code in the SM transmit from the recipient PC Client to the related charging device.

The method for SM transmission by employing the above system is similar to the method for downlink or uplink SM transmission, and thus will not be elaborated herein any further.

The system embodiment of the uplink SM transmission is as shown in the block diagram of Figure 5 and detailed as follows.

A system of uplink SM transmission includes a PC Client 501, an SM platform 502, an SMSGW or SMS 503, where,
the SM platform 502 is configured to receive an SM transmitted via the SMSGW or SMS 503, where the SM is identified by the public code and the number of the recipient PC Client; when the total digits of the public code plus the number of the recipient PC Client meet the requirement on length in the protocol, the public code in the SM is converted into a service code; then the SM is transmitted to the corresponding recipient PC Client according to the prestored correspondence between the number of the recipient PC Client and the service code;
the PC Client 501 is configured to receive the SM transmitted from the SM platform; and
the SM platform 502 is further configured to send the service code to the related charging device.

The method for SM transmission by employing the above system is similar to the method for downlink or uplink SM transmission, and thus will not be elaborated herein any further.

The system embodiment of an SM platform for downlink SM transmission in the present invention is as shown in block diagram of Figure 6 and detailed as follows.

An SM platform for downlink SM transmission includes a PC Client interface module 601, a first converting module 602, and an SMSGW interface module 603, where,
the PC Client interface module 601 is configured to receive an SM identified by the service code and the mobile terminal number;
the first converting module 602 is configured to the service code in the SM received by the interface module 601into a public code, where the total digits of the public code plus the mobile terminal number meet the requirement on length in the protocol; and
the SMSGW interface module 603 is configured to transmit the SM identified by the public code plus the mobile terminal number to the corresponding mobile terminal via the SMSGW/SMS.

The SM platform further includes a service code sending module 604, configured to send the service code of the SM to the related charging device.

The method for SM transmission by employing the above system is similar to the method for downlink or uplink SM transmission, and thus will not be elaborated herein any further.

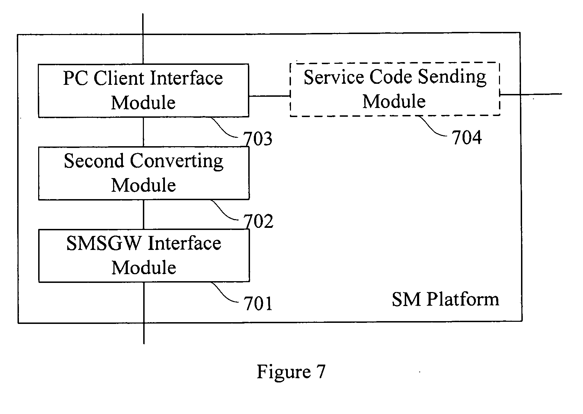

The system embodiment of an SM platform for uplink SM transmission in the present invention is as shown in the block diagram of Figure 7 and detailed as follows.

An SM platform for uplink SM transmission includes an SMSGW interface module 701, a second converting module 702, and a PC Client interface module 703, where,
the SMSGW interface module 701 is configured to receive the SM transmitted by the mobile terminal via the SMSGW/SMS, where the SM is identified by the public code and the number of the recipient PC Client and the public code contains no more than 10 digits;
the second converting module 702 is configured to convert the public code in the SM into a service code according to the prestored correspondence between the number of the recipient PC Client and the service code; and
the PC Client interface module 703 is configured to transmit the SM identified by the service code plus the number of the recipient PC Client to the corresponding PC Client.

The SM platform further includes a service code sending module 704, configured to send the service code of the SM to the related charging device; the service code sending module 704 may be connected to the PC Client interface module 703.

The method for SM transmission by employing the above system is similar to the method for downlink or uplink SM transmission, and thus will not be elaborated herein any further.

According to the above embodiments, in the process of downlink SM transmission, the SM is identified only by the mobile terminal number, and since the mobile terminal number is usually of 11 digits and meets the requirement (no more than 21 digits) in the conventional protocol, the SM may be transmitted to the mobile terminal properly; in the process of uplink SM transmission, the SM transmitted is identified by the public code and the number of the recipient PC Client; since the public code contains no more than 10 digits and the number of the recipient PC Client is commonly of 11 digits, and therefore, the total digits of the public code plus the number of the recipient PC Client are no more than 21 which meet the requirement on length regulated in the protocol; as a result, the SM is ensured to be transmitted properly.

According to the embodiments of the present invention, those skilled in the art can understand that the embodiments of the present invention can be implemented by incorporating software with a necessary common-purpose hardware platform. According to such understanding, the technical solution of the present invention can essentially, or in part which contributes to the prior art, be embodied by way of software product. The software product can be stored in a storage medium (e.g. a Read-Only Memory, ROM, a Random Access Memory, RAM, a magnetic disk, or an optical disk) which includes certain instructions for making a computer device (e.g., a personal computer, a server, a network device, etc.) to execute the method according to any of the embodiments of the present invention.

Embodiments of the present invention may be applied to multiple computer systems or settings of all or special purposes. Fore example, a personal computer, a server computer, a handset or portable device, a panel PC device, a multiprocessor system, a microprocessor-based system, a set-top box, a programmable consumer electronic device, a network PC, a small computer, a mainframe computer, a distributed computer environment including any of the above systems or devices, etc.

Embodiments of the present invention may be described in the common context of the computer executable instructions executed by a computer, eg program module. Generally, the program module includes the routine, program, object, component, data structure, etc for executing a specified task or realizing a specified abstract data type. The present invention may also be implemented in a distributed computer environment where the task is executed by a teleprocessing device connected via a communication network. In the distributed computer environment, the program module may be located in a local or remote computer storage medium including a memory device.

The above disclosure merely represents several specific embodiments, instead of being intended to limit the present invention. Variations devised by those skilled in the art are considered as falling into the scope of the present invention.

## Claims

1. A method for downlink short message, SM, transmission, comprising,
receiving an SM transmitted from a PC Client, wherein the SM is identified by a service code and a mobile terminal number and;
converting the service code into a public code, wherein the total digits of the public code plus the mobile terminal code meet the requirement on length regulated in a protocol; and
transmitting the SM identified by the public code plus the mobile terminal number to a corresponding mobile terminal.

2. The method according to claim 1, wherein converting the service code into a public code comprises,
converting the service code into a vacant public code.

3. The method according to claim 1, wherein receiving an SM identified by a service code and a mobile terminal number and transmitted from the PC Client comprises, receiving an SM transmitted from different PC Clients, wherein the SM is identified by the service code and the number of a mobile terminal; and,
correspondingly, converting the service code into a public code, wherein the total digits of the service code plus the mobile terminal number meet the requirement on length in the protocol, and wherein transmitting the SM identified by the public code plus the mobile terminal number to the mobile terminal comprises,
converting the service codes of different PC Clients into a uniform public code, wherein the total digits of the public code plus the mobile terminal number meet the requirement on length in the protocol; and
transmitting the SM from different PC Clients identified by the public code and the mobile terminal number to the corresponding mobile terminal.

4. The method according to any one of claims 1-3, further comprising,
sending the service code in the SM received from the PC Client to a charging related device.

5. A method for uplink short message, SM, transmission, comprising,
receiving an SM transmitted from an SM Service Center, SMS, wherein the SM is identified by a public code and a number of a recipient PC Client, and the total digits of the public code plus the recipient PC Client meet the requirement on length regulated in a protocol;
converting the public code into a service code according to the prestored correspondence between the number of the recipient PC Client and the service code; and
transmitting the SM identified by the service code plus the number of recipient PC Client to the corresponding recipient PC Client.

6. The method according to claim 5, further comprising,
sending the service code to a charging related device.

7. A short message, SM, platform for downlink SM transmission, comprising a PC Client interface module, a first converting module and an SM Service Gateway, SMSGW, interface module, wherein:
the PC Client interface module is configured to receive an SM identified by a service code and a mobile terminal number;
the first converting module is configured to convert the service code in the SM received by the PC Client interface module into a public code, wherein the total digits of the public code and the mobile terminal code meet the requirement on length regulated in the protocol; and
the SMSGW interface module is configured to transmit the SM identified by the public code plus the mobile terminal number to the corresponding mobile terminal.

8. The SM platform according to claim 7, further comprising,
a service code sending module, configured to send the service code of the SM to a related charging device.

9. A short message, SM, platform for uplink SM transmission, comprising, a PC Client interface module, a second converting module and an SM Service Gateway, SMSGW, interface module, where:
the SMSGW interface module is configured to receive an SM transmitted from a mobile terminal, wherein the SM is identified by a public code and a number of the recipient PC Client, and the total digits of the public code plus the number of the recipient PC Client meet the requirement on length regulated in the protocol;
the second converting module is configured to convert the public code in the SM into a service code according to the prestored correspondence between the number of the recipient PC Client and the public code; and
the PC interface module is configured to transmit the SM identified by the service code plus the number of the recipient PC Client to the corresponding recipient PC Client.

10. The SM platform according to claim 9, further comprising a service code sending module, configured to send the service code of the SM to the related charging device.
